(19) Europäisches Patentamt
European Patent Office
Office européen des brevets

(11) **EP 2 260 747 B1**

(12) **EUROPÄISCHE PATENTSCHRIFT**

(45) Veröffentlichungstag und Bekanntmachung des Hinweises auf die Patenterteilung:
**10.07.2013   Patentblatt 2013/28**

(51) Int Cl.:
*A47J 39/00* (2006.01)     *A47J 27/14* (2006.01)
*F24C 7/08* (2006.01)      *A47J 27/62* (2006.01)
*A21B 3/07* (2006.01)      *A23L 1/01* (2006.01)

(21) Anmeldenummer: **10173577.7**

(22) Anmeldetag: **07.05.2007**

(54) **Gargerät zum Führen zumindest eines Garvorgangs**

Cooking device for controlling at least one cooking process

Appareil de cuisson destiné à commander au moins un procédé de cuisson

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**15.12.2010   Patentblatt 2010/50**

(62) Dokumentnummer(n) der früheren Anmeldung(en) nach Art. 76 EPÜ:
**07009155.8 / 1 989 978**

(73) Patentinhaber: **Rational AG**
**86899 Landsberg/Lech (DE)**

(72) Erfinder:
• **Greiner, Michael, Dr.**
  **86899 Landsberg/Lech (DE)**
• **Breunig, Manfred**
  **86956 Schongau (DE)**

(74) Vertreter: **Weber-Bruls, Dorothée**
**Jones Day**
**Nextower**
**Thurn-und-Taxis-Platz 6**
**60313 Frankfurt am Main (DE)**

(56) Entgegenhaltungen:
**EP-A1- 1 798 479     WO-A-2005/016096**
**DE-C1- 4 324 015**

**Beschreibung**

Die vorliegende Erfindung betrifft ein Gargerät.

Im Stand der Technik sind zahlreiche Verfahren zum Führen zumindest eines Garvorgangs an sich bekannt.

So ist es beispielsweise aus der DE 199 45 021 A1 bekannt, einen Garvorgang in Abhängigkeit einer bestimmten Gargutgrösse als Garparameter zu führen, wobei die Kerntemperatur eines Garguts, der Durchmesser eines Garguts, die Dichte des Garguts, die Gargutart, der Reifegrad des Garguts, der pH-Wert des Garguts, die Konsistenz des Garguts, der Lagerungszustand des Garguts, der Geruch des Garguts, der Geschmack des Garguts, die Qualität des Garguts, die Bräunung des Garguts, die Krustenbildung des Garguts, der Vitaminabbau des Garguts, die Entstehung kanzerogener Substanzen im Gargut, die Hygiene des Garguts und/oder die Wärmeleitfähigkeit des Garguts als Gargutgrösse bestimmt werden können.

Aus der EP 1 338 849 A1 ist die Führung eines Garvorgangs in Abhängigkeit von zumindest zwei Parametern bekannt, die über ein wenigstens zweidimensionales Kennfeld von einer Bedienperson auswählbar sind. Bei den Parametern kann es sich beispielsweise um einen Bräunungsgrad, also den externen Gargrad eines Garguts, oder einer Kerntemperatur, also den internen Gargrad des Garguts, handeln.

Die DE 196 09 116 A1 offenbart ein Garverfahren in einem Garraum, das dann beendet wird, wenn eine Ist-Kerntemperatur in einem Gargut eine Soll-Kerntemperatur erreicht. Wenn zudem der Endzeitpunkt des Garverfahrens eingestellt ist, werden die Garraumtemperatur, die umlaufende Strömungsgeschwindigkeit im Garraum und die Feuchte im Garraum derart eingestellt oder verändert, dass zum vorgegebenen Endzeitpunkt die Soll-Kerntemperatur vorliegt.

Des weiteren sind im Stand der Technik zahlreiche Verfahren bekannt, die das Garen einer Vielzahl von Gargütern in einem Gargerät, insebsondere in unterschiedlichen Beladungsebenen eines Garraums, betreffen.

So sind aus der WO 2005/016096 A1 und der DE 43 24 015 C1 jeweils ein Gargerät mit einer Vielzahl von Beladungsebenen bekannt, wobei jeder Beladungsebene eine entweder manuell initiierbare oder automatisch auslösbare Uhr zugeordnet ist, über die eine Garzeit in dieser Beladungsebene einstellbar ist, die es ermöglicht, auf einer Anzeigeeinheit eine Restgarzeit für diese Beladungsebene anzuzeigen und/oder nach Ablauf der Garzeit einen Hinweis zum Entladen von Gargut aus dieser Beladungsebene auszugeben. Die DE 101 32 581 A1 betrifft ebenfalls ein Gargerät mit einer Vielzahl von Behandlungsebenen, in denen unterschiedliche Gargüter gegart werden können. Dabei ist es möglich, bei gleichzeitigem Beginn ein gemeinsames Ende des Garens dieser Gargüter zu erhalten, auch wenn die Gargüter unterschiedliche Garzeiten benötigen. Zu diesem Zwecke ist das Garraumklima in den verschiedenen Beladungsebenen separat einstellbar, um energiesparend die unterschiedlichen Garverfahren parallel in einem Garraum ablaufen lassen zu können.

Bei einem Verfahren gemäß der nicht-vorveröffentlichten EP 1 798 479 A1 wird von einem Gargerät angezeigt, welche Gargüter zeitgleich zu bereits im Garraum des Gargeräts angeordneten Gargütern garbar sind.

Ferner ist es aus der EP 0 313 768 B2 bekannt, ein parametergesteuertes System in einem Gargerät zu verwenden, das es ermöglicht, über eine Eingabeeinrichtung bei Auswahl eines bestimmten Garguts mindestens einen Wärmeparameter vorzugeben und bei nochmaligem Betätigen der Eingabeeinrichtung eine Stelle im Garraum für das ausgewählte Gargut anzuzeigen.

Die DE 10 2005 020 744 B3 offenbart zudem die Kompensation der Öffnung einer Garraumtür beim Führen eines Garvorgangs. Trotz der zahlreichen im Stand der Technik bekannten Garverfahren und Gargeräten besteht noch stets das Bedürfnis nach weiterer Flexibilität unter gleichzeitiger Automatisierung eines Garverfahrens.

Aufgabe der Erfindung ist es daher, das gattungsgemäße Gargerät derart weiterzuentwickeln, dass bei erhöhter Flexibilität eine erhöhte Garsicherheit im Vergleich zu den bekannten Gargeräten durch weiteres Automatisieren vorliegt, so dass am Ende eines Garvorgangs ein Garwunschergebnis vorliegt.

Diese Aufgabe wird erfindungsgemäß durch die Merkmale des Kennzeichens von Anspruch 1 gelöst.

Bevorzugte erfindungsgemäße Gargeräte sind in den Ansprüchen 2 bis 5 beschrieben.

Somit wird ein hohes Maß an Flexibilität geliefert, unter gleichzeitiger Beibehaltung einer exakten Führung eines Garprozesses zum Erfüllen eines Garwunsches. Es wird nämlich erfindungsgemäß vom Gargerät vorgeschlagen, ob und ggf. welches Gargut zusätzlich zu einem bereits laufenden Garvorgang gegart warden kann, was zu einer Energieeinsparung sowie Zeiteinsparung führt.

Bei einer ersten Alternative der Nutzung des erfindungsgemäßen Gargeräts wird die Möglichkeit bereitgestellt, mehrere Garprogramme automatisch hintereinander ablaufen zu lassen, selbst ineinander verschachtelt ohne Vorgabe einer Reihenfolge und auch mehrfach. Beispielsweise kann mit einer Startzeitvorwahl das gesamt Morgenprogramm in einer Bäckerei einmalig vorgegeben werden, so dass das Personal der Bäckerei jeden Morgen genau angezeigt bekommt, wann welches Gargut zu laden und dann auch zu entladen ist. Auch können Mischbeschickungen von Finishingabläufen bspw. zur Vorbereitung eines Banketts vorprogrammiert werden, wobei automatisch für Speisen mit längeren Gardauern zuerst eine Beladungsaufforderung erfolgt. Bei einer zweiten Alternative wird die Flexibiltät beim Garen dadurch erhöht, dass eine Bedienperson eingeben kann, dass ein Garvorgang auf die verbrauchte Energie, die benötigte Zeit und/oder den Gewichtsverlust des Garguts optimiert wird. Eine Kombination dieser beiden Alternativen führt somit insbesondere dazu, dass eine Bedienperson eine Vielzahl von Garprogrammen unter gleichzeitiger Angabe, dass ein Garen energiesparend durchzuführen ist, auswählen kann. Diese Informationen sind derart verwertbar, dass eine energieoptimierte Programmverkettung vorgeschlagen wird, durch Anzeige, wann welches Gargut zu laden und zu entladen ist.

Bevorzugt ist erfindungsgemäß dabei, dass die Ausgabeeinrichtung eine Beladungsaufforderung, unter Angabe zumindest eines Garguts und ggf. zusätzlich einer Garraumzone, wie einer Beladungsebene, einer Fehlermeldung und/oder einer Garinformation in Abhängigkeit von den eingegebenen Parametern, einer Vielzahl von gespeicherten Daten, insbesondere umfassend Garverläufe, zumindest einem ersten im Garraum erfassten Messwert, zumindest einem zweiten in zumindest einem Gargut erfassten Messwert, zumindest einem dritten Messwert eines Garmediums und/oder zumindest einem vierten Messwert zur Öffnung einer Tür zum Verschliessen des Garraums anzeigt. Aber auch eine Plausibilitätsprüfung der Eingaben der Bedienperson kann automatisch stattfinden.

Ferner kann vorgesehen sein, dass zumindest eine für den internen Gargrad und/oder externen Gargrad jedes Gargutes, der am Ende eines Garprogramms erwünscht ist, und/oder den C-Wert jedes Garguts charakteristische Grösse als Parameter eingebbar ist. Dies kann zu einer Steigerung der Garqualität führen.

Während eines Garvorgangs kann eine Vielzahl von Garprogrammen, die zumindest zum Teil auch unterschiedlich sein können, ablaufen, und/oder zumindest zwei Garprogramme zumindest zeitweise überlappend ablaufen, wobei der Garvorgang vorzugsweise speicherbar ist und/oder während des Gangvorgangs vorzugsweise eine Kompensation der Auswirkungen einer Öffnung einer Garraumtür durchführbar ist.

Dadurch kommt es nicht nur zur Vermeidung von Totzeiten sowie Einsparung von Ressourcen, sondern können auch langwierige mehrfach Eingaben vieler Garprogramme vermieden werden, nämlich durch Speicherung aller Eingaben, während Wunschgarergebnisse durch Kompensation jeder Öffnung einer Garraumtür sichergestellt sind.

Erfindungsgemäß kann des weiteren vorgesehen sein, dass der zumindest eine zumindest einen Garparameter bestimmende Parameter über ein mehrdimensionales Feld, das vorzugsweise auf der Anzeigeeinrichtung anzeigbar ist, ausgewählt wird. Somit liegt eine vereinfachte Bedienung vor.

Weitere Merkmale und Vorteile der Erfindung ergeben sich aus der nachfolgenden Beschreibung konkreter Ausführungsbeispiele.

Ein erfindungsgemäßes Gargerät ermöglicht es beispielsweise, eine morgendliche Thekenbeschickung für eine Bäckereifiliale zeit- und energieoptimiert zu gewährleisten. So können täglich verwendete Garprogramme, die jeden Tag aus tiefgefrorenen Rohlingen oder vorgebackenen Produkten frisch zu backende Teigwaren fertigen sollen, einmalig über eine Eingabeeinrichtung in ein nicht gezeigtes Gargerät eingegeben und gespeichert werden, so dass dann nach jedem morgendlichen Start des Gargeräts dieses zuerst seinen Garraum aufheizt und dann die vorgegebenen Programme sozusagen in einem Stapel abarbeitet, und zwar unter besonderer Berücksichtigung einer Zeit- und Energieoptimierung. Ist es z. B. jeden Tag erforderlich, Baguettes, Brötchen, Brezeln und Croissants zu backen, so können auf einer Anzeigeeinrichtung des Gargeräts nach Starten desselben und einer Aufheizzeit folgende Aufforderungen aufscheinen:

1. Beladen Baguette,
2. Entladen Baguette,
3. Beladen Brötchen,
4. Entladen Brötchen,
5. Beladen Brezeln,
6. Entladen Brezeln,
7. Beladen Croissant, und
8. Entladen Croissant;

wobei zwischen den verschiedenen Aufforderungen zum Beladen jeweils ein Vorheizen stattfinden kann. Nach Durchlaufen dieses Programmstapels sind die Theken der Bäckereifiliale gefüllt.

Eine weitere Abarbeitung eines Programmstapels kann beispielsweise bei der Zubereitung eines Mittagsmenüs für die Schulverpflegung von Nutzung sein. Dabei sollen Speisen, beispielsweise jeweils in Form einer Fleischscheibe, einer Kartoffelbeilage und einer Gemüsebeilage für viele Schüler in Gastronomiebehältern derart regeneriert bzw. fertig gegart werden, dass eine Essenssausgabe zu einem bestimmten Zeitpunkt stattfinden kann. Nach Einschalten des erfindungsgemäßen Gargeräts und Eingabe der Speisen wird bei dann eine optimale Verkettung der abzulaufenden Garverfahren ausgerechnet und sodann auf der Anzeigeeinrichtung nach einem Vorheizen des Garraums die Aufforderung gegeben, zuerst das Fleisch zu laden. Nach einer ersten Zeitspanne erfolgt dann die Aufforderung des Beladens der Kartoffelbeilage. Nach einer zweiten Zeitspanne kommt dann die Beladungsaufforderung für die Gemüsebeilage. Nach Ablauf einer dritten Zeitspanne kommt schliesslich die Aufforderung, sowohl das Fleisch als auch die Kartoffelbeilage und die Gemüsebeilage zu entladen.

Beispielsweise kann auch parallel zu einem Dämpfen von Gemüse in einem Garraum ein Eierkochen in demselben stattfinden, da beide ein ähnliches Garraumklima benötigen. Genauer gesagt kann bei Eingabe der Zubereitung von Kartoffel in einem Dämpfverfahren und dem Kochen von Eiern bei einem erfindungsgemäßen Gargerät auf einer Anzeigeeinrichtung nach einem Vorheizschritt erscheinen, dass die Kartoffeln und die Eier gleichzeitig beladen werden sollen, während dann eine Entladungsanzeige für die Eier vor einer Entladungsanzeige für das Gemüse erfolgt. Türöffnungszeiten werden dabei automatisch berücksichtigt, wie beispielsweise in der DE 10 2005 020 744 B3 der Anmelderin beschrieben.

Durch die erfindungsgemäße Programmverschachtelung und/oder -stapelung ist es also möglich, ein Garraumklima zur Energie- und Zeiteinsparung zwecks Zubereitung unterschiedlicher Speisen zu nutzen.

Es ist also festzuhalten, dass ein erfindungsgemäßes Gargerät eine optimale Zeitfolge von hintereinander und/oder zumindest teilweise parallel ablaufenden Verfahren berechnet und einer Bedienperson das entsprechende Ergebnis durch Beladungs- und Entladungsaufforderungen anzeigt. Um hier eine weitere Variabilität einzubringen, ist erfindungsgemäß auch vorge-sehen, ein Garen mit unterschiedlichen Prioritäten durchzuführen. Mit anderen Worten soll nicht nur eine Optimierung der Garqualität, also hinsichtlich des internen und externen Gargrads, stattfinden, sondern auch die Möglichkeit bestehen, dass ein Kunde eine energieoptimierte, zeit optimierte oder gewichtsoptimierte Variante wählt. Allerdings beeinflussen sich all diese Parameter gegenseitig, so dass ein Kompromiss ausgewählt wird, so dass mit anderen Worten die Auswahl einer Bedienperson einen Schwerpunkt bei der Optimierung eines Garverfahrens festlegt. So kann beispielsweise eine Anzeigeeinrichtung eines erfindungsgemäßen, nicht gezeigten Gargeräts ein zweidimensionales Feld zur Auswahl von Garparametern anzeigen, bspw. in Form einer Zeit auf der x-Achse und einer Energie auf der y-Achse, und eine Bedienperson kann in diesem Feld einen Punkt auswählen. Ist die Anzeigeeinrichtung in Form eines Touchscreens gegeben, kann einfach ein Punkt durch einen Fingerdruck aktiviert werden, wobei eine Auswahl auch über einen Joystick denkbar ist.

Eine Zeit- und Energieoptimierung erhält man bei Gargeräten, die zusätzlich zu einer konventionellen Heizeinrichtung, sei es in Form einer elektrischen Heizeinrichtung oder umfassend einen Gasbrenner, zumindest eine Mikrowellenquelle aufweist, da Mikrowellen eine höhere Flexibilität ermöglichen, indem sie zu einer schnellen Erhöhung der Kerntemperatur im Inneren eines Garguts führen, ohne dass dadurch ein bestimmter Endgarzustand zu einem frühen Zeitpunkt erreicht wird. Daher ist es bei Ansteuerung einer Mikrowellenquelle empfehlenswert, zur Führung des Garprozesses den sogenannten Kochwert (C-Wert) heranzuziehen, der sich wie folgt berechnen lässt:

$$ C_{BT}^{UF} = \int_{St}^{t'} UF^{\frac{[T(t)-BT]}{10}} dt, $$

wobei

UF = Umrechnungsfaktor,
BT = Bezugstemperatur = 100 deg. C,
T(t) = Kerntemperaturverlauf,
St = Zeitpunkt, bei dem eine Starttemperatur überschritten wurde, abhängig vom Lebensmittel und
t' = Ist-Zeit.

Beispielsweise möchte eine Bedienperson eines erfindungsgemäßen Gargeräts für eine Feier ein Essen zu einer bestimmten Zeit servieren und die Zubereitung soll energiesparend ablaufen. So könnte die Bedienperson zur Vorbereitung der Feier eingeben, dass am Tag der Feier zu einer bestimmten Uhrzeit ein Braten fertig gegart sein sollen, und zwar mit möglichst geringem Energieverbrauch. So würde das erfindungsgemäße Verfahren berechnen, zu welchem Zeitpunkt eine Beladungsanzeige zu erfolgen hat, um die Bedienperson zu erinnern, das Gargerät zu beladen.

Sollte die von der Bedienperson erwünschte Zeit der Fertigstellung des Bratens kürzer als die tatsächlich benötigte Garzeit sein, so wird auf der Anzeigeeinrichtung des Gargeräts ein entsprechender Hinweise ausgegeben, nämlich in Form einer Fehlermeldung. Es findet also eine Plausibilitätsprüfung erfindungsgemäß automatisch statt.

Auf der Anzeigeeinrichtung kann während eines Garprozesses angezeigt werden, welche Gargeräteeinstellungen vorliegen, beispielsweise betreffend die Mikrowellenleistung, die Feuchte und dergleichen. Auch ist es erfindungsgemäß möglich, dass eine Bedienperson über die Anzeigeeinrichtung die Information erhält, welches Gargut parallel zu einem bereits ablaufenden Garprozess optimal mitgegart werden könnte. So könnte beispielsweise beim Garen eines Bratens, was eine längere Zeitdauer in Anspruch nimmt, angezeigt werden, dass Gemüsebeilagen ab einem bestimmten Zeitpunkt hinzugegeben werden können. Es wird also eine optimale Programmverschachtelung und Parallelverarbeitung von Gargütern vorgeschlagen.

Ferner ist darauf hinzuweisen, dass die Berechnungen bei dem erfindungsgemäßen Gargerät auf der Grundlage zuvor aufgenommener Messkurven unter Annahme einer Vollbeschickung eines Gargeräts durchgeführt werden können, so dass bei einer Teilbeschickung eine Anpassung des Verfahrens automatisch stattfinden muss, nämlich in Abhängigkeit von über zumindest eine Messeinrichtung aufgenommene Messwerte. Solche Anpassungen sind im Stand der Technik gut bekannt, siehe beispielsweise die DE 196 09 116 A1.

Der Vorteil einer Programmverkettung oder -stapelung ist insbesondere auch darin zu sehen, dass eine Bedienperson eine Abfolge von Garprogrammen nur einmal eingeben muss und in dem Gargerät hinterlegen kann.

Die in der voranstehenden Beschreibung und in den Ansprüchen offenbarten Merkmale können sowohl einzeln als auch in jeder beliebigen Kombination für die Verwirklichung der Erfindung in ihren verschiedenen Ausführungsformen wesentlich sein.

## Patentansprüche

1. Gargerät mit einem Garraum sowie einer Steuer- oder Regeleinrichtung in Wirkverbindung mit

   • einer Heizeinrichtung, umfassend zumindest eine elektrische Heizung, einen Gasbrenner, einen Wärmetauscher und/oder eine Einrichtung zum Abstrahlen elektromagnetischer Strahlung in den Garraum, insbesondere in Form einer Mikrowellenquelle, einer Einrichtung zum Einführen von Feuchtigkeit in den Garraum, umfassend zumindest einen Dampfgenerator, einen Wasserzerstäuber und/oder eine Beschwadungseinrichtung,
   • einer Einrichtung zum Abführen von Feuchtigkeit aus dem Garraum, umfassend zumindest eine Frischluftzufuhr und/oder einen Kondensator,
   • einer Einrichtung zum Zirkulieren von Garraumatmosphäre, umfassend zumindest ein Gebläse und/oder eine Pumpe, einer Speichereinrichtung, in der eine Vielzahl von Garverläufen abgelegt sind,
   • einer Eingabeeinrichtung zum Eingeben von Parametern, über die eine Vielzahl von Gargütern und zumindest eine Start- und/oder Endzeit des Garens zumindest eines Garguts und zumindest ein Garparameter ausgewählt werden, und einer Ausgabeeinrichtung, die in Abhängigkeit von der Start und/oder Endzeitauswahl angibt, wann welches Gargut in den Garraum zu laden und aus dem Garraum zu entfernen ist, so dass zumindest ein Garvorgang in dem Garraum des Gargerätes auf der Grundlage einer Mehrzahl von über die Eingabeeinrichtung des Gargerätes eingebbaren Parametern führbar ist durch Vorschlagen, ob und ggf. welches Gargut zusätzlich zu einem bereits laufenden Garvorgang garbar ist.

2. Gargerät nach Anspruch 1, **dadurch gekennzeichnet, dass** die Eingabeeinrichtung die Auswahl zumindest zweier Parameter über ein zweidimensionales Feld, beispielsweise über einen Touch-Screen oder einen Joystick, ermöglicht, wobei vorzugsweise über das Touch-Screen zumindest ein Garprogramm und eine Start- und/oder Endzeit für das Garprogramm oder ein Gargut und eine Start- und/oder Endzeit für das Garen des Garguts auswählbar sind.

3. Gargerät nach einem der vorangehenden Ansprüche, **dadurch gekennzeichnet, dass** bei einer Vielzahl von Gargütern die Reihenfolge des Garens der Gargüter mittels des Gargerätes optimierbar ist, wobei über zumindest einen Garparameter bestimmenden Parameter die Reihenfolge des Garens der Gargüter optimiert wird, so dass jeder Garvorgang bezüglich der vom Gargerät verbrauchten Energie, der benötigten Zeit und/oder des Gewichtsverlustes jedes Garguts optimiert ist.

4. Gargerät nach einem der vorangehenden Ansprüche, **dadurch gekennzeichnet, dass** die Ausgabeeinrichtung eine Beladungsaufforderung unter Angabe eines Garguts oder eines Garguts und einer Garraumzone, wie einer Beladungsebene, einer Fehlermeldung und/oder einer Garinformation in Abhängigkeit von den eingegebenen Parametern, einer Vielzahl von gespeicherten Daten, insbesondere umfassend Garverläufe, zumindest einem ersten im Garraum erfassten Messwert, zumindest einem zweiten in zumindest einem Gargut erfassten Messwert, zumindest einem dritten Messwert eines Garmediums, und/oder zumindest einem vierten Messwert zur Öffnung einer Tür zum Verschliessen des Garraums anzeigt, wobei über zumindest eine Sensiereinheit der erste, zweite, dritte und/oder vierte Messwert erfassbar ist.

5. Gargerät nach einem der vorangehenden Ansprüche, **dadurch gekennzeichnet, dass** nach Beendigung eines jeden Garvorgangs jeder dabei durchlaufene Garverlauf in der Speichereinrichtung ablegbar ist.

## Claims

1. A cooking device including a cooking chamber and a control or regulating device that is operatively connected to

   • a heating device comprising at least one electric heater, one gas burner, one heat exchanger and/or one device for emitting electromagnetic radiation into the cooking chamber, in particular in the form of a microwave source,
   • a device for introducing moisture into the cooking chamber, comprising at least one steam generator, one water atomizer and/or one device for injecting steam,
   • a device for removing moisture from the cooking chamber, comprising at least one fresh air supply system and/or one condenser,
   • a device for circulating cooking chamber atmosphere, comprising at least one fan and/or one pump, to a storage device where a plurality of cooking procedures are stored,
   • an input device for entering parameters that serve to select a plurality of items to be cooked and at least one start and/or end time for cooking at least one item to be cooked and at least one cooking parameter, and

• an output device, which indicates when which item to be cooked is to be loaded into the cooking chamber and removed from the cooking chamber in accordance with the start and/or end time selected,

such that at least one cooking process in the cooking chamber of the cooking device can be controlled on the basis of a plurality of parameters that can be entered by means of the input device of the cooking device, by suggesting whether an item to be cooked, and if so which item to be cooked, can be cooked in addition to a cooking process that is already in progress.

2. The cooking device according to Claim 1, **characterized in that** the input device allows at least two parameters to be selected using a two-dimensional field, for example by means of a touch screen or a joystick, wherein preferably at least one cooking program and one start and/or end time for said cooking program or an item to be cooked and a start and/or end time for cooking said item to be cooked can be selected by means of the touch screen.

3. The cooking device according to any one of the preceding claims, **characterized in that** in case of a plurality of items to be cooked the cooking device can be used to optimize the order of cooking said items to be cooked, wherein the order of cooking said items to be cooked is optimized by means of at least one parameter that determines cooking parameters, so that each cooking process is optimized with regard to the energy used by the cooking device, the time required and/or the weight loss of each item to be cooked.

4. The cooking device according to any one of the preceding claims, **characterized in that** the output device displays a request for loading while indicating an item to be cooked or an item to be cooked and a cooking chamber zone, such as a loading level, an error message and/or cooking information in accordance with the parameters entered, a plurality of stored data, in particular comprising cooking procedures, at least one first value measured in the cooking chamber, at least one second value measured in at least one item to be cooked, at least one third measured value of a cooking medium and/or at least one fourth measured value for opening a door that serves to close the cooking chamber, wherein the first, second, third and/or fourth measured value(s) can be sensed by means of at least one sensing unit.

5. The cooking device according to any one of the preceding claims, **characterized in that** each cooking procedure realized during a cooking process can be stored in the storage device once each cooking process is finished.

## Revendications

1. Appareil de cuisson avec un espace de cuisson ainsi qu'un dispositif de commande ou régulation en liaison fonctionnelle avec

• un dispositif de chauffage, comprenant au moins un chauffage électrique, un brûleur à gaz, un échangeur de chaleur et/ou un dispositif destiné à émettre un rayonnement électromagnétique dans l'espace de cuisson, en particulier sous la forme d'une source de micro-ondes, un dispositif destiné à introduire de l'humidité dans l'espace de cuisson, comprenant au moins un générateur de vapeur, un pulvérisateur d'eau et/ou un dispositif d'injection de vapeur,
• un dispositif destiné à évacuer de l'humidité en provenance de l'espace de cuisson, comprenant au moins une alimentation en air frais et/ou un condensateur,
• un dispositif destiné à faire circuler l'atmosphère d'espace de cuisson, comprenant au moins une soufflante et/ou une pompe, un dispositif de mémorisation, dans lequel une pluralité de procédés de cuisson sont stockés,
• un dispositif d'entrée destiné à l'entrée de paramètres, par l'intermédiaire duquel une pluralité de produits à cuire et au moins un temps de début et/ou un temps de fin de la cuisson d'au moins un produit à cuire et au moins un paramètre de cuisson sont choisis, et un dispositif de sortie, qui indique, en fonction du choix du temps de début et/ou du temps de fin, quand et quel produit à cuire doit être chargé dans l'espace de cuisson et quand il faut le sortir de l'espace de cuisson, de sorte qu'au moins un procédé de cuisson peut être mis en oeuvre dans l'espace de cuisson de l'appareil de cuisson sur la base d'une pluralité de paramètres pouvant être entrés par l'intermédiaire du dispositif d'entrée de l'appareil de cuisson, en recommandant si un produit à cuire et éventuellement lequel peut être cuit en plus d'un procédé de cuisson déjà en cours.

2. Appareil de cuisson selon la revendication 1, **caractérisé en ce que** le dispositif d'entrée permet le choix d'au moins deux paramètres par l'intermédiaire d'une zone bidimensionnelle, par exemple par l'intermédiaire d'un écran tactile ou d'une manette, au moins un programme de cuisson et un temps de début et/ou un temps de fin pouvant être choisi(s) de manière préférée par l'intermédiaire de l'écran tactile pour le programme de cuisson, ou un produit à cuire et un temps de début et/ou un temps de fin pouvant être choisi(s) pour la cuisson du produit à cuire.

3. Appareil de cuisson selon l'une quelconque des revendications précédentes, **caractérisé en ce que** pour une pluralité de produits à cuire, la séquence de cuisson des produits à cuire peut être optimisée au moyen de l'appareil de cuisson, la séquence de cuisson des produits à cuire étant optimisée par l'intermédiaire d'au moins un paramètre définissant un paramètre de cuisson, de sorte que chaque procédé de cuisson est optimisé en fonction de l'énergie nécessitée par l'appareil de cuisson, du temps nécessaire et/ou de la perte de poids de chaque produit à cuire.

4. Appareil de cuisson selon l'une quelconque des revendications précédentes, **caractérisé en ce que** le dispositif de sortie affiche une invitation de chargement avec spécification d'un produit à cuire ou d'un produit à cuire et d'une zone formant espace de cuisson, comme un plan de chargement, d'un message d'erreur et/ou d'une information de cuisson faisant intervenir les paramètres entrés, une pluralité de données mémorisées comprenant en particulier des procédés de cuisson, au moins une première valeur de mesure recueillie dans l'espace de cuisson, au moins une deuxième valeur de mesure recueillie dans au moins un produit à cuire, au moins une troisième valeur de mesure d'un milieu de cuisson, et/ou au moins une quatrième valeur de mesure destinée à ouvrir une porte destinée à fermer l'espace de cuisson, les première, deuxième, troisième et/ou quatrième valeurs de mesure pouvant être recueillies par l'intermédiaire d'au moins une unité de détection.

5. Appareil de cuisson selon l'une quelconque des revendications précédentes, **caractérisé en ce qu'**après achèvement d'un procédé de cuisson respectif, chaque procédé de cuisson achevé peut être stocké dans le dispositif de mémorisation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19945021 A1
- EP 1338849 A1
- DE 19609116 A1
- WO 2005016096 A1
- DE 4324015 C1
- DE 10132581 A1
- EP 1798479 A1
- EP 0313768 B2
- DE 102005020744 B3